# FASCICULE DE BREVET EUROPEEN

(11) **EP 4 285 061 B1**
(45) Date de publication et mention de la délivrance du brevet: **16.04.2025**
(21) Numéro de dépôt: 22701986.6
(22) Date de dépôt: 27.01.2022
(51) Int. Cl.: F25J 3/02, F25J 3/08, C01B 32/50

(54) **PROCÉDÉ ET APPAREIL DE SÉPARATION D'UN DÉBIT RICHE EN DIOXYDE DE CARBONE PAR DISTILLATION POUR PRODUIRE DU DIOXYDE DE CARBONE LIQUIDE**
VERFAHREN UND VORRICHTUNG ZUR TRENNUNG EINES KOHLENDIOXIDREICHEN STROMS DURCH DESTILLATION ZUR HERSTELLUNG VON FLÜSSIGEM KOHLENDIOXID
METHOD AND APPARATUS FOR SEPARATING A FLOW RICH IN CARBON DIOXIDE BY DISTILLATION TO PRODUCE LIQUID CARBON DIOXIDE

(30) Priorité: 27.01.2021 FR 2100737
(43) Date de publication de la demande: 06.12.2023
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: TRAN, Michael, 94503 CHAMPIGNY SUR MARNE (FR); LECLERC, Mathieu, 94503 CHAMPIGNY SUR MARNE (FR)
(74) Mandataire: Air Liquide
(86) Numéro de dépôt international: PCT/EP2022/051845
(87) Numéro de publication internationale: WO 2022/162041

(56) Documents cités:
- WO-A2-2015/075398
- CN-B- 106 979 664
- US-A1- 2007 232 706
- US-A1- 2008 196 584
- US-A1- 2012 067 082
- US-A1- 2013 036 765
- US-A1- 2014 123 700
- US-A1- 2020 318 897

## Description

La présente invention est relative à un procédé et à un appareil de séparation d'un débit riche en dioxyde de carbone par distillation pour produire du dioxyde de carbone gazeux et/ou liquide.

Dans les procédés habituellement décrits de compression et purification d'un débit riche en dioxyde de carbone incluant une colonne à distiller, le fluide de la tête de colonne est condensé partiellement puis dirigé vers un séparateur de phases. Le liquide est soit introduit en tant que reflux dans la colonne par gravité dans le cas où le condenseur est placé au-dessus de la colonne, ou soit injecté à l'aide d'une pompe dans le cas contraire. Dans certains cas, tout ou une partie du courant de la tête de colonne est recyclée puis comprimée en amont de la colonne pour être ensuite purifiée de ses composés légers. Dans ces inventions, il n'est jamais question d'utiliser le courant d'alimentation sous refroidi dans un échangeur multi courant pour former le reflux de la colonne afin d'en améliorer son efficacité.

"Start-up of Port-Jérôme CRYOCAPtm plant" de Pichot et al, Energy Procedia montre un procédé de séparation de dioxyde de carbone et d'oxygène où le débit d'alimentation sert à rebouillir la cuve de la colonne. Le débit d'alimentation est donc entièrement condensé et envoyé en tête de la colonne.

US2014/123700 décrit un procédé de séparation d'un débit contenant au moins 95% mol de CO2 et une impureté plus légère que le CO2. Dans ce procédé, le débit à séparer est refroidi jusqu'à une température intermédiaire d'un échangeur de chaleur et envoyé à un séparateur de phases. La fraction liquide formée dans le séparateur est envoyée à un niveau intermédiaire d'une colonne de distillation et la fraction gazeuse est envoyée à un niveau supérieur de cette colonne après refroidissement. Le liquide de cuve de la colonne est un produit liquide contenant au moins 99% mol de CO2.

Dans un procédé selon l'invention de liquéfaction et de séparation de CO₂ riche en CO₂ (>95% molaire), prévu par exemple pour usage alimentaire, composée majoritairement pour le reste d'impuretés (O₂, N₂, CO par exemples), le CO₂ sous pression est liquéfié et ensuite séparé en deux courants dirigés pour l'un vers une colonne de séparation dont le but est d'obtenir un produit liquide en pied de colonne concentré en CO₂ (>99, voire > 99.8% molaire). La première partie du courant principal est envoyée à un niveau intermédiaire de la colonne, après détente. La seconde partie du courant principal, sous refroidie dans l'échangeur principal et également détendu, sert de reflux à cette même colonne de séparation afin de bénéficier d'un reflux le plus froid possible pour limiter les pertes en tête de colonne et ainsi augmenter le rendement global du procédé. Ces deux courants seront donc l'alimentation éventuellement principale et le reflux de la colonne.

En supprimant le séparateur de phases de US2013/123700, la partie du débit d'alimentation utilisée comme reflux n'a pas été enrichie en légers, ce qui permet de réduire la demande de rebouillage et donc d'améliorer l'efficacité énergétique du procédé.

La présente invention est relative à un procédé de liquéfaction et de séparation de CO₂, par exemple d'alimentation, riche en CO₂. L'usage d'une colonne séparative est nécessaire lorsque le produit final doit être concentré en CO₂ (>99% molaire). L'objectif de la présente invention est de minimiser la perte en CO₂ en tête de colonne par l'ajout d'un reflux intégré à l'échangeur principal du liquéfacteur afin de réduire le nombre d'équipements totaux.

Dans un procédé selon l'invention, un débit d'alimentation contenant au moins 95% mol de dioxyde de carbone contient également au moins une autre impureté, telle que l'oxygène, l'azote, l'argon, le monoxyde de carbone.

L'invention propose d'utiliser une partie du débit de l'alimentation qui est liquéfiée à une plus haute pression que la colonne comme reflux de la colonne à distiller. Ce courant est sous refroidi dans un moyen d'échange de chaleur jusqu'à une température minimum proche du point triple du CO₂ puis détendu à la pression de la colonne.

L'intérêt de ce schéma est que :
- D'une part l'apport de ce niveau de froid provenant du courant de reflux va permettre d'augmenter le rendement du procédé, tout en gardant une bonne séparation des impuretés dictée par le débit de rebouillage. Le débit partiel de CO₂ se retrouvant donc moindre dans le gaz soutiré en tête de colonne, le courant de pied de colonne représentant le produit est donc plus enrichi en CO₂, ce qui induit un meilleur rendement du procédé global. L'apport de froid à cette température qui est la plus basse du procédé est limité uniquement au reflux.
- D'autre part, cette intégration énergétique évite l'installation d'un condenseur de tête de colonne, un pot séparateur pour le gaz de tête partiellement condensé et une pompe. Cette configuration présente donc le bénéfice d'avoir moins de contraintes d'installation liées à l'hydraulique du système. De plus, le reflux ainsi soutiré du courant d'alimentation n'a pas encore été enrichi en légers, ce qui va donc permettre de limiter la demande en rebouillage pour ainsi améliorer l'efficacité énergétique du procédé.

Une variante de l'invention propose de détendre une première fois le courant d'alimentation en sortie d'échangeur principal avec une première vanne puis avec une seconde vanne après sous refroidissement dans l'échangeur principal. Ce système permet de minimiser la température du reflux résultante de la détente. En effet, les détentes de dioxyde de carbone peuvent s'accompagner d'une hausse de température dans les conditions du liquéfacteur. Réduire la chute de pression finale (tout en considérant une température de -52°C avant détente) permet de minimiser cette hausse et donc d'obtenir un reflux le plus froid possible, ceci dans le but de limiter les pertes de CO₂ en tête de colonne. US2008/0196584 décrit un procédé de séparation d'un débit contenant au moins 95% mol de dioxyde de carbone qui ne produit pas de liquide comme produit final. Le débit à séparer est séparé en amont d'un échangeur de chaleur, un des débits étant partiellement condensé dans un rebouilleur de cuve d'une colonne de distillation où le débit se sépare.

Selon un objet de l'invention, il est prévu un procédé de séparation d'un débit contenant au moins 95% mol de dioxyde de carbone ainsi qu'au moins une impureté plus légère que le dioxyde de carbone par distillation dans lequel :
i.On refroidit le débit dans un moyen d'échange de chaleur jusqu'à une première température intermédiaire du moyen d'échange de chaleur, supérieure à celle du bout froid et inférieure à celle du bout chaud du moyen d'échange de chaleur pour former un débit liquide refroidi à la première température intermédiaire et à une première pression et on divise le débit liquide refroidi en au moins deux pour former une première fraction liquide et une deuxième fraction liquide,
ii.On détend la première fraction sous forme liquide jusqu'à la pression d'une colonne de distillation (K) appelée deuxième pression, inférieure à la première pression et on l'envoie à un niveau intermédiaire de la colonne de distillation,
iii.On sousrefroidit la deuxième fraction dans le moyen d'échange de chaleur jusqu'au bout froid de celui-ci, on la détend sous forme liquide jusqu'à la pression de la colonne de distillation et on l'envoie à un niveau de la colonne de distillation au-dessus du point d'arrivée de la première fraction, et
iv.On soutire en cuve de la colonne un débit liquide contenant au moins 99% mol de dioxyde de carbone comme produit liquide.

Selon d'autres aspects facultatifs :
- on envoie au moins une partie du produit liquide se vaporiser dans le moyen d'échange de chaleur et
- on réchauffe dans le moyen d'échange de chaleur un gaz de tête de la colonne de distillation.
- tout le gaz de tête de la colonne de distillation est soutiré de la colonne et réchauffé dans le moyen d'échange de chaleur.
- on divise le débit pour former les première et deuxième fractions en dehors du moyen d'échange de chaleur et on détend la deuxième fraction dans une vanne jusqu'à une troisième pression intermédiaire entre la première pression et celle de la colonne de distillation avant de la renvoyer au moyen d'échange de chaleur pour la refroidir.
- on renvoie la deuxième fraction au moyen d'échange de chaleur à une deuxième température supérieure à la première température.
- on divise le débit pour former les première et deuxième fractions dans le moyen d'échange de chaleur
- au moins une partie du liquide de cuve de la colonne se réchauffe dans le moyen d'échange de chaleur contre le débit à séparer et est renvoyée sous forme gazeuse en cuve de la colonne.
- la partie du liquide de cuve est envoyée à le moyen d'échange de chaleur à une troisième température plus élevée que la première température intermédiaire, et éventuellement que la deuxième température.
- la colonne comprend deux sections, une première section entre les arrivées des première et deuxième fractions et une deuxième section en dessous de l'arrivée de la première fraction, la première section ayant un diamètre inférieur ou égal à celui de la deuxième section.
- le rapport entre les débits des première et deuxième fractions est variable selon la pureté en dioxyde de carbone du débit à séparer.
- la première pression est supérieure à celle de la colonne d'au moins 1 bar, voire d'au moins 10 bars, préférentiellement d'au moins 20 bars, ou d'au moins 30 bars.
- on vaporise une partie du liquide de cuve de la colonne à une pression inférieure à la première pression.

Selon un autre objet de l'invention, il est prévu un appareil de séparation d'un débit contenant au moins 95% mol de dioxyde de carbone ainsi qu'au moins une impureté plus légère que le dioxyde de carbone par distillation comprenant un moyen d'échange de chaleur, une colonne de distillation, des moyens pour envoyer le débit se refroidir dans le moyen d'échange de chaleur jusqu'à une première température intermédiaire supérieure à celle du bout froid et inférieure à celle du bout chaud du moyen d'échange de chaleur pour former un débit liquide à la première température intermédiaire et à une première pression, des moyens pour diviser le débit liquide en au moins deux pour former une première fraction liquide et une deuxième fraction liquide, des moyens pour détendre la première fraction liquide jusqu'à la pression de la colonne de distillation appelée deuxième pression, inférieure à la première pression, des moyens pour envoyer la première fraction détendue à un niveau intermédiaire de la colonne de distillation, des moyens pour sortir la deuxième fraction liquide du bout froid du moyen d'échange de chaleur après sousrefroidissement, des moyens (50) pour détendre la deuxième fraction sousrefroidie jusqu'à la pression de la colonne de distillation, des moyens pour envoyer la deuxième fraction détendue de la colonne de distillation à un niveau au-dessus du niveau intermédiaire et des moyens pour soutirer de la cuve de la colonne un débit liquide contenant au moins 99% mol de dioxyde de carbone comme produit liquide.

Selon d'autres aspects facultatifs, il est prévu :
- le moyen d'échange de chaleur est un échangeur de chaleur à plaques et à ailettes.
- l'appareil comprend des moyens pour envoyer une partie du liquide de cuve de la colonne au moyen d'échange pour se réchauffer par échange de chaleur avec le débit à séparer.
- l'appareil comprend des moyens pour envoyer une partie seulement du liquide de cuve de la colonne au moyen d'échange pour se réchauffer par échange de chaleur avec le débit à séparer.
- l'appareil ne comprend aucune turbine de détente.
- l'appareil ne comprenant pas de rebouilleur de cuve chauffé par le débit à séparer ou une partie du débit à séparer.
- l'appareil ne comprend aucun moyen de séparation de phase relié en amont de la colonne.
- des moyens pour envoyer au moins une partie du produit liquide se vaporiser dans le moyen d'échange de chaleur.
- des moyens pour envoyer un gaz de tête de la colonne de distillation se réchauffer dans le moyen d'échange de chaleur.

L'invention sera décrite de manière plus détaillée en se référant aux Figures.

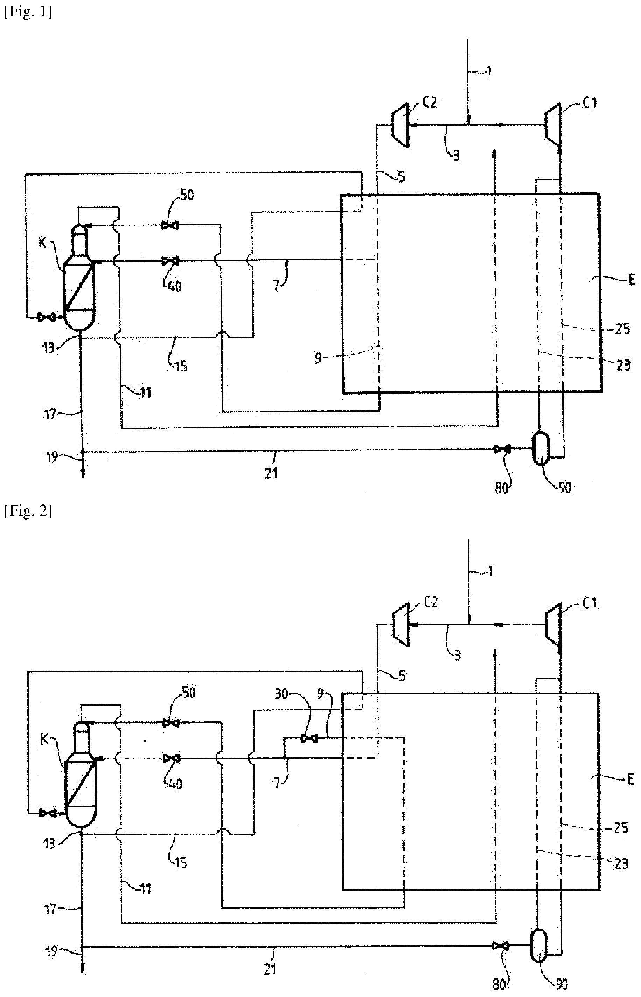

[FIG.1] et [FIG.2] illustrent des procédés selon l'invention.

Dans la [FIG.1], le débit 1 contenant au moins 95% mol de dioxyde de carbone contient également au moins une autre impureté, telle que l'oxygène, l'azote, l'argon, le monoxyde de carbone. Le débit 1 à une première pression est comprimé dans un compresseur C2 jusqu'à une première pression plus élevée que celle de la colonne K pour former un débit comprimé 5 à la première pression.

La première pression est supérieure d'au moins 1 bar à celle de la colonne K, de préférence d'au moins 10 bars, voire d'au moins 20, 30 ou 40 bars supérieure à celle de la colonne K. Par exemple, la première pression peut être d'au moins 50 bars.

Le débit comprimé 5 se refroidit dans le moyen d'échange de chaleur E à échange indirect pour former un débit refroidi et liquéfié 2 à la première pression. Le débit refroidi et liquéfié est divisé en deux parties 7,9 dans le moyen d'échange de chaleur. La partie 7 sort du moyen d'échange de chaleur E à une température intermédiaire T1 de celui-ci sans avoir été détendu en amont du point de division.

Il sera compris que le moyen d'échange de chaleur E peut être composé d'un seul échangeur de chaleur comme illustré dans la figure. Il peut être également être composé d'une pluralité d'échangeurs de chaleur.

Les deux fractions 7,9 se trouvent à la première pression supérieure à celle de la colonne d'au moins 1 bar, voire d'au moins 10 bars, préférentiellement d'au moins 20 bars, ou d'au moins 30 bar. De préférence l'échangeur de chaleur E est un échangeur à plaques et à ailettes.

La deuxième fraction 9 poursuit son refroidissement jusqu'au bout froid de l'échangeur de chaleur E pour la sousrefroidir dans le moyen d'échange de chaleur principal jusqu'à une température minimum proche du point triple du CO2. Ensuite elle est détendue à la pression de la colonne K dans la vanne 50 et envoyée comme débit liquide en haut d'une colonne de distillation K au-dessus du point d'arrivée de la première fraction 7. La colonne est une simple colonne, n'ayant pas de condenseur de tête. Elle contient des plateaux ou des garnissages structurés et opère à une deuxième pression plus basse que la première pression. Elle comprend une première section ayant un premier diamètre et une deuxième section au-dessus de la première section ayant un diamètre inférieur ou égal au premier diamètre.

La première fraction 7 est envoyée à la colonne K à un niveau intermédiaire de celle-ci, par exemple entre la première et la deuxième sections après détente depuis la première pression jusqu'à la pression de la colonne K dans la vanne 50.

Le liquide de cuve 13 de la colonne K contient au moins 99% mol de dioxyde de carbone et est divisé en trois parties. Une partie 19 sert de produit liquide riche en dioxyde de carbone. Une partie 21 est détendue dans la vanne 80 pour former un débit diphasique séparé dans un séparateur de phases 90. La partie gazeuse 23 se réchauffe dans l'échangeur et est envoyé au compresseur C1. La partie liquide 25 est vaporisée et réchauffée dans le moyen d'échange de chaleur E du bout froid jusqu'au bout chaud. Elle peut être divisée en plusieurs parties qui sont détendues à des pressions différentes, introduites au bout froid ou à un intermédiaire de le moyen d'échange de chaleur E et vaporisées à des pressions différentes, pour optimiser l'échange de chaleur. En aval du bout chaud, le gaz formé est comprimé dans un compresseur C1 et rejoint le gaz 1 pour former le gaz 3. La ou les pressions de vaporisation est/sont inférieure à la première pression, qui est celle du débit 5.

Il sera compris que les compresseurs C1 et C2 peuvent être des étages du même compresseur.

Selon la pression à laquelle est vaporisé le débit 21, le compresseur C1 peut être éliminé et le gaz formé en vaporisant le débit 21 peut être envoyé à l'entrée du compresseur C2.

La pression de vaporisation du débit 21 peut être supérieure, égale ou inférieure à la pression du débit 1 à traiter. Ainsi on peut par exemple comprimer le débit 1 dans au moins un premier compresseur (ou étage de compresseur) pour être rejoint par le débit vaporisé 21 à pression plus élevée. Éventuellement les deux débits mélangés peuvent être comprimés ensemble pour former le débit 2.

Une partie 15 du liquide de cuve se réchauffe à partir d'une troisième température T3>T2>T1 au bout chaud du moyen d'échange de chaleur E et est détendue dans une vanne et renvoyée en cuve sous forme gazeuse pour alimenter la colonne K. Les fluides 7,9, 15 introduits dans la colonne participent à la distillation et sont séparés pour former un produit riche en dioxyde de carbone 19.

Une partie du liquide de cuve et éventuellement une partie du liquide vaporisé sert de produit du procédé contenant au moins 99%, voire au moins 99, 8% de dioxyde de carbone.

Le gaz 11 de tête de la colonne contient au moins une impureté plus légère que le dioxyde de carbone telles que l'oxygène, l'azote et l'argon. Il est réchauffé dans le moyen d'échange de chaleur E dans l'exemple mais ne l'est pas nécessairement. De même aucun liquide provenant de la distillation n'est nécessairement réchauffé dans le moyen d'échange de chaleur.

Les frigories pour refroidir le gaz à séparer peuvent être fournies par un cycle de réfrigération et/ou un apport de froid d'une source extérieure, par exemple une arrivée de liquide à basse température.

On remarque l'absence d'un condenseur de tête de colonne K, l'absence de pot séparateur pour le gaz de tête et le fait que le schéma ne comprend pas de pompe, à part éventuellement une pompe de produit.

La colonne K opère à au moins 10 bars, de préférence entre 10 et 16 bars.

En variante, illustrée dans la [Fig.2], on peut séparer les fractions du gaz d'alimentation 5 après avoir sorti le débit 5 à une température intermédiaire de l'échangeur E. La première fraction 7, comme avant, est détendue dans la vanne 40 et envoyée à un niveau intermédiaire de la colonne K. La deuxième fraction 9 est détendue une première fois en sortie d'échangeur principal E avec une vanne 30 jusqu'à une pression intermédiaire (par exemple de 55 bars à 31 bars, si la première pression est de 55 bars). Ensuite elle est renvoyée au moyen d'échange de chaleur à une température plus élevée, puisque la détente dans la vanne 30 a augmenté la température du débit. La deuxième fraction 9 se refroidit jusqu'au bout froid du moyen d'échange de chaleur puis est détendue une deuxième fois avec une vanne 50 après sous refroidissement dans l'échangeur principal E, par exemple de 31 bars jusqu'à la pression de la colonne K (par exemple entre 10 et 16 bars). Ce système permet de minimiser la température du reflux résultante de la détente. En effet, les détentes peuvent s'accompagner d'une hausse de température dans les conditions du liquéfacteur. Réduire la chute de pression finale (tout en considérant une température de -52°C avant détente dans la vanne 50) permet de minimiser cette hausse et donc d'obtenir un reflux le plus froid possible, ceci dans le but de limiter les pertes de CO₂ en tête de colonne.

Pour les deux exemples le rapport entre les débits des première et deuxième fractions est variable selon la pureté en dioxyde de carbone du débit à séparer. Ainsi plus le débit 1 est pur en dioxyde de carbone, plus la première fraction 7 sera petite et la deuxième fraction 9 sera grande.

Dans les deux exemples, le procédé est maintenu en froid par la détente du débit d'alimentation, aucune turbine de détente n'étant nécessaire.

## Revendications

1. Procédé de séparation d'un débit contenant au moins 95% mol de dioxyde de carbone ainsi qu'au moins une impureté plus légère que le dioxyde de carbone par distillation dans lequel :
i.On refroidit le débit (1) dans un moyen d'échange de chaleur (E) jusqu'à une première température intermédiaire du moyen d'échange de chaleur, supérieure à celle du bout froid et inférieure à celle du bout chaud du moyen d'échange de chaleur pour former un débit liquide refroidi à la première température intermédiaire et à une première pression et on divise le débit liquide refroidi en au moins deux pour former une première fraction liquide (7) et une deuxième fraction liquide (9),
ii.On détend la première fraction sous forme liquide jusqu'à la pression d'une colonne de distillation (K) appelée deuxième pression, inférieure à la première pression et on l'envoie à un niveau intermédiaire de la colonne de distillation,
iii.On sousrefroidit la deuxième fraction dans le moyen d'échange de chaleur jusqu'au bout froid de celui-ci, on la détend sous forme liquide jusqu'à la pression de la colonne de distillation et on l'envoie à un niveau de la colonne de distillation au-dessus du point d'arrivée de la première fraction, et
iv.On soutire en cuve de la colonne un débit liquide (13) contenant au moins 99% mol de dioxyde de carbone comme produit liquide (17, 21).

2. Procédé selon la revendication 1 dans lequel au moins une partie du gaz de tête (11) de la colonne de distillation (K) est soutirée de la colonne et réchauffée dans le moyen d'échange de chaleur (E).

3. Procédé selon l'une des revendications précédentes dans lequel on divise le débit pour former les première et deuxième fractions (7,9) en dehors du moyen d'échange de chaleur (E) et on détend la deuxième fraction dans une vanne (30) jusqu'à une troisième pression intermédiaire entre la première pression et celle de la colonne de distillation avant de la renvoyer au moyen d'échange de chaleur pour la refroidir.

4. Procédé selon la revendication 3 dans lequel on renvoie la deuxième fraction (9) au moyen d'échange de chaleur (E) à une deuxième température supérieure à la première température.

5. Procédé selon l'une des revendications précédentes dans lequel au moins une partie (15) du liquide de cuve de la colonne (K) se réchauffe dans le moyen d'échange de chaleur (E) contre le débit à séparer et est renvoyée sous forme gazeuse en cuve de la colonne.

6. Procédé selon la revendication 5 dans lequel la partie (15) du liquide de cuve est envoyée au moyen d'échange de chaleur (E) à une troisième température plus élevée que la première température intermédiaire, et éventuellement que la deuxième température.

7. Procédé selon l'une des revendications précédentes dans lequel la colonne (K) comprend deux sections, une première section entre les arrivées des première et deuxième fractions et une deuxième section en dessous de l'arrivée de la première fraction, la première section ayant un diamètre inférieur ou égal à celui de la deuxième section.

8. Procédé selon l'une des revendications précédentes dans lequel le rapport entre les débits des première et deuxième fractions (7,9) est variable selon la pureté en dioxyde de carbone du débit à séparer.

9. Procédé selon l'une des revendications précédentes dans lequel la première pression est supérieure à celle de la colonne (K) d'au moins 1 bar, voire d'au moins 10 bars, préférentiellement d'au moins 20 bars, ou d'au moins 30 bars.

10. Appareil de séparation d'un débit contenant au moins 95% mol de dioxyde de carbone ainsi qu'au moins une impureté plus légère que le dioxyde de carbone par distillation comprenant un moyen d'échange de chaleur (E), une colonne de distillation (K), des moyens pour envoyer le débit se refroidir dans le moyen d'échange de chaleur jusqu'à une première température intermédiaire supérieure à celle du bout froid et inférieure à celle du bout chaud du moyen d'échange de chaleur pour former un débit liquide à la première température intermédiaire et à une première pression, des moyens pour diviser le débit liquide en au moins deux pour former une première fraction liquide (7) et une deuxième fraction liquide (9), des moyens (40) pour détendre la première fraction liquide jusqu'à la pression de la colonne de distillation appelée deuxième pression, inférieure à la première pression, des moyens pour envoyer la première fraction détendue à un niveau intermédiaire de la colonne de distillation, des moyens pour sortir la deuxième fraction liquide du bout froid du moyen d'échange de chaleur après sousrefroidissement, des moyens (50) pour détendre la deuxième fraction sousrefroidie jusqu'à la pression de la colonne de distillation, des moyens pour envoyer la deuxième fraction détendue de la colonne de distillation à un niveau au-dessus du niveau intermédiaire et des moyens pour soutirer de la cuve de la colonne un débit liquide contenant au moins 99% mol de dioxyde de carbone comme produit liquide.

11. Appareil selon la revendication 10 dans lequel le moyen d'échange de chaleur (E) est un échangeur de chaleur à plaques et à ailettes.

12. Appareil selon la revendication 10 ou 11 comprenant des moyens pour envoyer une partie (21) du liquide de cuve de la colonne au moyen d'échange (E) pour se réchauffer par échange de chaleur avec le débit (5, 9) à séparer.

13. Appareil selon la revendication 10, 11 ou 12 ne comprenant aucune turbine de détente.

14. Appareil selon la revendication 10, 11, 12 ou 13 ne comprenant pas de rebouilleur de cuve chauffé par le débit à séparer ou une partie du débit à séparer.

15. Appareil selon la revendication 10, 11, 12, 13 ou 14 ne comprenant aucun moyen de séparation de phase relié en amont de la colonne (K).

## Patentansprüche

1. Verfahren zur Trennung eines Durchflusses, der mindestens 95 mol-% Kohlendioxid sowie mindestens eine Verunreinigung enthält, die leichter ist als Kohlendioxid, durch Destillation, wobei:
i. der Durchfluss (1) in einer Wärmetauschereinrichtung (E) auf eine erste Zwischentemperatur der Wärmetauschereinrichtung abgekühlt wird, die höher ist als diejenige des kalten Endes und niedriger als diejenige des heißen Endes der Wärmetauschereinrichtung, so dass ein auf die erste Zwischentemperatur abgekühlter Flüssigkeitsdurchfluss bei einem ersten Druck gebildet wird, und der abgekühlte Flüssigkeitsdurchfluss in mindestens zwei geteilt wird, um eine erste flüssige Fraktion (7) und eine zweite flüssige Fraktion (9) zu bilden,
ii. die erste Fraktion in flüssiger Form bis auf den Druck einer Destillationskolonne (K) entspannt wird, der als zweiter Druck bezeichnet wird und niedriger ist als der erste Druck, und auf einer mittleren Stufe der Destillationskolonne eingeleitet wird,
iii. die zweite Fraktion in der Wärmetauschereinrichtung bis auf deren kaltes Ende unterkühlt wird, in flüssiger Form bis auf den Druck der Destillationskolonne entspannt und auf einer Stufe der Destillationskolonne oberhalb des Einleitungspunkts der ersten Fraktion eingeleitet wird und
iv. aus dem Sumpf der Kolonne ein mindestens 99 mol-% Kohlendioxid enthaltender Flüssigkeitsdurchfluss (13) als flüssiges Produkt (17, 21) entnommen wird.

2. Verfahren nach Anspruch 1, wobei mindestens ein Teil des Kopfgases (11) der Destillationskolonne (K) aus der Kolonne abgezogen und in der Wärmetauschereinrichtung (E) erhitzt wird.

3. Verfahren nach einem der vorhergehenden Ansprüche, wobei der Durchfluss zum Bilden der ersten und der zweiten Fraktion (7,9) außerhalb der Wärmetauschereinrichtung (E) geteilt wird und die zweite Fraktion in einem Ventil (30) bis auf einen dritten Zwischendruck zwischen dem ersten Druck und demjenigen der Destillationskolonne entspannt wird, bevor sie in die Wärmetauschereinrichtung zurück geleitet wird, um sie abzukühlen.

4. Verfahren nach Anspruch 3, wobei die zweite Fraktion (9) bei einer zweiten Temperatur, die höher ist als die erste Temperatur, zu der Wärmetauschereinrichtung (E) rückgeführt wird.

5. Verfahren nach einem der vorhergehenden Ansprüche, wobei mindestens ein Teil (15) der Sumpfflüssigkeit der Kolonne (K) in der Wärmetauschereinrichtung (E) gegen den zu trennenden Durchfluss erhitzt und in Gasform zum Sumpf der Kolonne rückgeführt wird.

6. Verfahren nach Anspruch 5, wobei der Teil (15) der Sumpfflüssigkeit bei einer dritten Temperatur, die höher ist als die erste Zwischentemperatur und gegebenenfalls als die zweite Temperatur, zur Wärmetauschereinrichtung (E) geleitet wird.

7. Verfahren nach einem der vorhergehenden Ansprüche, wobei die Kolonne (K) zwei Abschnitte umfasst, einen ersten Abschnitt zwischen den Einlässen für die erste und die zweite Fraktion und einen zweiten Abschnitt unterhalb des Einlasses für die erste Fraktion, wobei der erste Abschnitt einen Durchmesser hat, der kleiner als derjenige oder gleich demjenigen des zweiten Abschnitts ist.

8. Verfahren nach einem der vorhergehenden Ansprüche, wobei das Verhältnis zwischen den Durchflüssen der ersten und der zweiten Fraktion (7,9) je nach der Kohlendioxid-Reinheit des zu trennenden Durchflusses variabel ist.

9. Verfahren nach einem der vorhergehenden Ansprüche, wobei der erste Druck um mindestens 1 bar oder sogar um mindestens 10 bar, vorzugsweise um mindestens 20 bar oder um mindestens 30 bar höher ist als derjenige der Kolonne (K).

10. Vorrichtung zum Trennen eines Durchflusses, der mindestens 95 mol-% Kohlendioxid sowie mindestens eine Verunreinigung enthält, die leichter ist als Kohlendioxid, durch Destillation, umfassend eine Wärmetauschereinrichtung (E), eine Destillationskolonne (K), Einrichtungen, um den Durchfluss zum Abkühlen in die Wärmetauschereinrichtung bis auf eine erste Zwischentemperatur, die höher ist als diejenige des kalten Endes und niedriger als diejenige des heißen Endes der Wärmetauschereinrichtung, zu leiten, um einen Flüssigkeitsdurchfluss bei der ersten Zwischentemperatur und bei einem ersten Druck zu bilden, Einrichtungen zum Teilen des Flüssigkeitsdurchflusses in mindestens zwei, um eine erste flüssige Fraktion (7) und eine zweite flüssige Fraktion (9) zu bilden, Einrichtungen (40) zum Entspannen der ersten flüssigen Fraktion bis auf den Druck der Destillationskolonne, der als zweiter Druck bezeichnet wird und niedriger ist als der erste Druck, Einrichtungen, um die erste entspannte Fraktion zu einer mittleren Stufe der Destillationskolonne zu leiten, Einrichtungen zum Entnehmen der zweiten flüssigen Fraktion vom kalten Ende der Wärmetauschereinrichtung nach Unterkühlung, Einrichtungen (50) zum Entspannen der unterkühlten zweiten Fraktion bis auf den Druck der Destillationskolonne, Einrichtungen, um die entspannte zweite Fraktion der Destillationskolonne zu einer Stufe oberhalb der Zwischenstufe zu leiten, und Einrichtungen, um einen mindestens 99 mol-% Kohlendioxid enthaltenden Flüssigkeitsdurchfluss aus dem Sumpf der Kolonne als flüssiges Produkt abzuziehen.

11. Vorrichtung nach Anspruch 10, wobei die Wärmetauschereinrichtung (E) ein Platten- und Lamellenwärmetauscher ist.

12. Vorrichtung nach Anspruch 10 oder 11, umfassend Einrichtungen, um einen Teil (21) der Kolonnensumpfflüssigkeit zur Tauschereinrichtung (E) zu leiten, damit sie durch Wärmeaustausch mit dem zu trennenden Durchfluss (5, 9) erhitzt wird.

13. Vorrichtung nach Anspruch 10, 11 oder 12, die keine Entspannungsturbine umfasst.

14. Vorrichtung nach Anspruch 10, 11, 12 oder 13, die keinen durch den zu trennenden Durchfluss oder einen Teil des zu trennenden Durchflusses erhitzten Sumpf-Verdampfer aufweist.

15. Vorrichtung nach Anspruch 10, 11, 12, 13 oder 14, die keine stromaufwärts der Kolonne (K) angeschlossene Phasentrennungseinrichtung umfasst.

## Claims

1. Process for the separation of a flow containing at least 95 mol% of carbon dioxide and also at least one impurity lighter than carbon dioxide by distillation, in which:
i. the flow (1) is cooled in a heat exchange means (E) down to a first intermediate temperature of the heat exchange means, greater than that of the cold end and lower than that of the hot end of the heat exchange means, to form a liquid flow cooled to the first intermediate temperature and at a first pressure, and the cooled liquid flow is divided into at least two in order to form a first liquid fraction (7) and a second liquid fraction (9),
ii. the first fraction in liquid form is expanded to the pressure of a distillation column (K), called second pressure, which is lower than the first pressure, and it is sent to an intermediate level of the distillation column,
iii. the second fraction is subcooled in the heat exchange means down to the cold end of the latter, it is expanded in liquid form to the pressure of the distillation column and it is sent to a level of the distillation column above the point of arrival of the first fraction, and
iv. a liquid flow (13) containing at least 99 mol% of carbon dioxide is withdrawn at the bottom of the column as liquid product (17, 21).

2. Process according to Claim 1, in which at least a part of the overhead gas (11) from the distillation column (K) is withdrawn from the column and heated in the heat exchange means (E).

3. Process according to either of the preceding claims, in which the flow is divided in order to form the first and second fractions (7, 9) outside the heat exchange means (E) and the second fraction is expanded in a valve (30) to a third intermediate pressure between the first pressure and that of the distillation column before being returned to the heat exchange means in order to cool it.

4. Process according to Claim 3, in which the second fraction (9) is returned to the heat exchange means (E) at a second temperature greater than the first temperature.

5. Process according to one of the preceding claims, in which at least a part (15) of the bottom liquid from the column (K) is heated in the heat exchange means (E) against the flow to be separated and is returned in gaseous form to the bottom of the column.

6. Process according to Claim 5, in which the part (15) of the bottom liquid is sent to the heat exchange means (E) at a third temperature greater than the first intermediate temperature, and optionally than the second temperature.

7. Process according to one of the preceding claims, in which the column (K) comprises two sections, a first section between the arrivals of the first and second fractions and a second section below the arrival of the first fraction, the first section having a diameter less than or equal to that of the second section.

8. Process according to one of the preceding claims, in which the ratio between the flows of the first and second fractions (7, 9) can be varied according to the carbon dioxide purity of the flow to be separated.

9. Process according to one of the preceding claims, in which the first pressure is greater than that of the column (K) by at least 1 bar, indeed even by at least 10 bars, preferably by at least 20 bars, or by at least 30 bars.

10. Apparatus for the separation of a flow containing at least 95 mol% of carbon dioxide and also at least one impurity lighter than carbon dioxide by distillation comprising a heat exchange means (E), a distillation column (K), means for sending the flow to be cooled in the heat exchange means down to a first intermediate temperature greater than that of the cold end and lower than that of the hot end of the heat exchange means in order to form a liquid flow at the first intermediate temperature and at a first pressure, means for dividing the liquid flow into at least two in order to form a first liquid fraction (7) and a second liquid fraction (9), means (40) for expanding the first liquid fraction to the pressure of the distillation column, called second pressure, which is lower than the first pressure, means for sending the expanded first fraction to an intermediate level of the distillation column, means for removing the second liquid fraction from the cold end of the heat exchange means after subcooling, means (50) for expanding the subcooled second fraction to the pressure of the distillation column, means for sending the expanded second fraction from the distillation column at a level above the intermediate level and means for the withdrawal, from the bottom of the column, of a liquid flow containing at least 99 mol% of carbon dioxide as liquid product.

11. Apparatus according to Claim 10, in which the heat exchange means (E) is a plate and fin heat exchanger.

12. Apparatus according to Claim 10 or 11, comprising means for sending a part (21) of the bottom liquid from the column to the exchange means (E) in order to be heated by heat exchange with the flow (5, 9) to be separated.

13. Apparatus according to Claim 10, 11 or 12, not comprising any expansion turbine.

14. Apparatus according to Claim 10, 11, 12 or 13, not comprising a bottom reboiler heated by the flow to be separated or a part of the flow to be separated.

15. Apparatus according to Claim 10, 11, 12, 13 or 14, not comprising any phase separation means connected upstream of the column (K).
